# EUROPÄISCHE PATENTSCHRIFT

(11) **EP 4 283 180 B1**
(45) Veröffentlichungstag und Bekanntmachung des Hinweises auf die Patenterteilung: **15.10.2025**
(21) Anmeldenummer: 22174743.9
(22) Anmeldetag: 23.05.2022
(51) Int. Cl.: F17C 3/08

(54) **KYROTANKVORRICHTUNG**
CYROTANKER
DISPOSITIF FORMANT RÉSERVOIR CRYOGÉNIQUE

(43) Veröffentlichungstag der Anmeldung: 29.11.2023
(73) Patentinhaber: MAGNA Energy Storage Systems GesmbH, 8261 Sinabelkirchen (AT)
(72) Erfinder: HUMENBERGER, Harald, 8181 St. Ruprecht (AT); PUNTIGAM, David, 8522 Gross St.Florian (AT)
(74) Vertreter: Zangger, Bernd

(56) Entgegenhaltungen:
- EP-B1- 2 981 756
- WO-A1-2022/012867
- DE-A1- 102008 054 090
- US-B1- 6 230 502

## Beschreibung

### Gebiet der Erfindung

Die vorliegende Erfindung betrifft eine Kyrotankvorrichtung, umfassend einen Innenbehälter zur Aufnahme eines Mediums, insbesondere von Wasserstoff, und einen Außenbehälter.

### Stand der Technik

Kyrotankvorrichtungen sind an sich bekannt und werden zur Speicherung tiefkalter Flüssigkeiten, insbesondere von flüssigem Wasserstoff, eingesetzt. Das Medium kann insbesondere als Treibstoff für ein fahrendes oder fliegendes Fortbewegungsmittel eingesetzt werden, beispielsweise für ein Kraftfahrzeug, Flugzeug oder eine Weltraumrakete. Kyrotankvorrichtungen weisen üblicherweise einen Innenbehälter, also Innentank, auf, in den das im Tank gespeicherte Medium, also insbesondere der Wasserstoff, aufgenommen ist und einen den Innenbehälter umgebenden Außenbehälter. Zwischen Innenbehälter und Außenbehälter ist üblicherweise ein Vakuum eingerichtet, um die Wärmeübertragung von außen nach innen zu verringern. Solche Kyrotankvorrichtungen sind üblicherweise zylindrisch ausgebildet.

Aus der EP 2 981 756 B1 ist eine Behälteranordnung bekannt aus einem Außenbehälter und einem zur Wärmedämmung im Außenbehälter gelagerten Innenbehälter, wobei zwischen dem Innenbehälter und dem Außenbehälter ein ringförmiger Einbauraum definiert ist, wobei ein einziges, räumlich in alle Richtungen wirkende Kräfte übertragendes Festlager vorgesehen ist, das stabförmige Festlagersicherungselemente aufweist, die einerseits am Außenbehälter und andererseits am Innenbehälter angreifen und auf Zug und Druck beanspruchbar sind, wobei die stabförmigen ortsfesten Lagersicherungselemente sowohl mit dem Innenbehälter als auch mit dem Außenbehälter fest verbunden sind.

Die DE 10 2008 054090 A1 offenbart einen Behälter zum Aufnehmen und Speichern von Flüssigkeiten und viskosen Stoffen, insbesondere von kryogenen Fluiden, mit einem inneren Mantel zum Aufnehmen und Speichern der Flüssigkeiten und viskosen Stoffe, einem äußeren Mantel, welcher den inneren Mantel vollständig umgibt, und einen Zwischenraum, welcher von dem inneren Mantel und dem äußeren Mantel begrenzt ist, wobei der innere Mantel von dem äußeren Mantel deformierbar und gegenüber dem äußeren Mantel relativ bewegbar aufgenommen ist und wobei der Zwischenraum zwischen dem inneren Mantel und dem äußeren Mantel wärmeisolierend oder einen Wärmefluss reduzierend ausgebildet ist, wobei der innere Mantel in dem äußeren Mantel über in dem Zwischenraum zwischen dem inneren Mantel und dem äußeren Mantel angeordnete, mechanische Kräfte und/oder Momente übertragende Streben aufgehängt ist, wobei die Streben jeweils mit einem Ende an dem inneren Mantel und mit dem anderen Ende an dem äußeren Mantel verbindbar sind.

WO 2022/012867 A1 offenbart eine bekannte Kryotankvorrichtung.

Derzeit am Markt befindliche Kryotanksysteme können zur Befestigung des Innentanks im Außenbehälter eine polare Aufhängung verwenden, das heißt dass die Befestigungsachse der polaren Aufhängung durch die Polpunkte der Behälterböden - an den axialen Enden der zylindrischen Behälter - geht. Die Verbindung zwischen den Außenbehälterböden und dem Innentank erfolgt üblicherweise durch rohrförmige Bauteile. Man spricht auch von einer Zentralrohraufhängung.

Bei LNG-Tanks gibt es Lösungen, bei denen die Aufhängungselemente aus Edelstahl bestehen. Das ist für Wasserstofftanks aufgrund des relativ hohen Wärmeleitwertes von Edelstahl, wegen der hohen Anforderungen an die thermische Performance, kaum umsetzbar. Daher kommen üblicherweise Verbundfaserrohre zum Einsatz, die zwar festigkeitstechnisch ähnlich belastbar sind wie Edelstahlrohre, aber eine geringere Steifigkeit aufweisen.

Durch die steigenden Anforderungen an den maximal zulässigen Arbeitsdruck für Wasserstofftanks werden auch die erforderlichen Wandstärken für den Innentank höher. Somit steigt unter anderem die Masse und auch das rotatorische Massenträgheitsmoment des Innentanks. Gerade bei mobilen Kryotanks mit Zentralrohraufhängung kann es daher im Betrieb zu einer Resonanz der Eigenfrequenz des Innentanks und der Anregerfrequenz des Fahrzeuges kommen, die zu einer Beschädigung der Aufhängung führen kann.

### Zusammenfassung der Erfindung

Es ist eine Aufgabe der Erfindung, eine Kyrotankvorrichtung der genannten Art in dieser Hinsicht zu verbessern und insbesondere eine Kyrotankvorrichtung anzugeben, bei der Beschädigungen der Aufhängung aufgrund des Eigenschwingungsverhaltens der Kryotankvorrichtung verringert werden.

Die Lösung der Aufgabe erfolgt durch eine Kyrotankvorrichtung mit den Merkmalen gemäß Anspruch 1.

Die Kyrotankvorrichtung umfasst einen Innenbehälter zur Aufnahme eines Mediums, insbesondere von Wasserstoff, und einen Außenbehälter, wobei der Innenbehälter und der Außenbehälter im Wesentlichen zylindrische Form aufweisen, wobei zwischen dem Innenbehälter und dem Außenbehälter eine polare Aufhängung eingerichtet ist, wobei mindestens ein stabförmiges tangentiales Abstützungselement zwischen dem Innenbehälter und dem Außenbehälter eingerichtet ist, so dass sich das tangentiale Abstützungselement im Wesentlichen in Umfangsrichtung des Innen- und Außenbehälters von einer Anbindung am Innenbehälter bis zu einer Anbindung am Außenbehälter hin erstreckt, wobei das tangentiale Abstützungselement zumindest in einer Dimension normal auf dessen stabförmige Erstreckung beweglich ausgebildet ist.

Erfindungsgemäß weist eine Kyrotankvorrichtung somit zumindest ein, bevorzugt aber mehrere tangentiale Abstützungselemente auf, die zwischen einem Innenbehälter und einem Außenbehälter der Kyrotankvorrichtung eingerichtet sind.

Es wurde festgestellt, dass die erforderlichen Eigenfrequenzwerte für die rotatorische Eigenschwingungsform des Innentanks aufgrund der zu geringen Torsionssteifigkeit der polaren Innentankaufhängung nicht erreicht werden können. Demzufolge wird erfindungsgemäß eine Maßnahme zur Erhöhung der rotatorischen Eigenfrequenz getroffen.

Die Innentankaufhängung mittels polarer Aufhängung, insbesondere mittels Zentralrohr, ist fertigungstechnisch sehr einfach umsetzbar, besteht aus relativ wenigen kostengünstigen Teilen und ist daher aus wirtschaftlichen Gesichtspunkten schwer zu übertreffen. Um diese Einfachheit zu bewahren und die durch die Nachteile des Konzeptes zu verringern, werden als tangentiale Abstützungen stabförmige Teile eingesetzt, die zumindest in einer Dimension, oder auch in zwei Dimensionen, normal auf dessen stabförmige Erstreckung beweglich ausgebildet sind. Die Abstützungselemente werden erfindungsgemäß von biegeschlaffen Elementen gebildet, die nur Zugkräfte aufnehmen können. Erfindungsgemäß sind derartige Abstützungselemente paarweise, jeweils spiegelsymmetrisch zu einer die Behälterachse beinhaltenden Ebene, angeordnet.

Das tangentiale Abstützungselement ist stabförmig ausgebildet, also im Wesentlichen lang und mit geringem Querschnitt. Bevorzugt bildet das tangentiale Abstützungselement eine Gerade.

Erfindungsgemäß sind mehrere tangentiale Abstützungselemente entlang des Umfangs des Innenbehälters und des Außenbehälters verteilt, in regelmäßigen Abständen.

Erfindungsgemäß sind von mehreren tangentialen Abstützungselementen jeweils zwei tangentiale Abstützungselemente spiegelsymmetrisch angeordnet in Bezug auf eine die Behälterachse beinhaltende Ebene.

Erfindungsgemäß wird die polare Aufhängung durch ein Zentralrohr gebildet. Die polare Aufhängung, insbesondere das Zentralrohr, verläuft entlang der Längsmittelachse der Behälter. Bevorzugt weist das Zentralrohr einseitig ein Festlager auf, ist also axial festgelegt. Auf der anderen Seite weist das Zentralrohr bevorzugt ein Loslager auf, so dass eine Kompensation von axialen Wärmedehnungen ermöglicht wird.

Erfindungsgemäß ist die polare Aufhängung durch ein Verbundfaserrohr gebildet.

Wichtig ist, dass über die Abstützungselemente möglichst wenig Wärme vom Außenbehälter in den Innentank eingebracht wird. Dementsprechend sind die Abstützungselemente möglichst lang, mit möglichst geringem Querschnitt, bevorzugt aus einem Werkstoff mit geringer Wärmeleitfähigkeit ausgeführt. Alternativ oder zusätzlich können die Anbindungen, also Befestigungen der Abstützungselemente am Innen- und/oder Außenbehälter mit geringer Wärmeleitfähigkeit ausgebildet werden, insbesondere als separate Anbindungselemente.

Vorzugsweise ist das tangentiale Abstützungselement am Innenbehälter und/oder am Außenbehälter mittelbar über ein thermisch entkoppelndes Anbindungselement befestigt.

Das Anbindungselement kann aus einem thermisch schlecht leitenden Werkstoff bestehen, beispielsweise aus einem glasfaserverstärkten Polymerwerkstoff. Das Abstützungselement kann gelenkig an einem oder an beiden Enden mit einem Anbindungselement verbunden sein. Die Verbindung zwischen Abstützungselement und Anbindungselement und/oder zwischen Anbindungselement und Behälter kann beispielsweise durch Schweißen, Nieten, Schrauben oder Klemmen erfolgen.

Bevorzugt umfasst das Anbindungselement einen Schwenkbolzen und das tangentiale Abstützungselement ist am Schwenkbolzen schwenkbar gelagert. Das Abstützungselement kann auch in zwei Dimensionen schwenkbar sein, beispielsweise wenn die Verbindung zu einem Anbindungselement über ein Kugelgelenk oder über zwei Schwenkbolzen erfolgt.

Das Anbindungselement und/oder das Abstützungselement im Bereich des Übergangs zum Anbindungselement kann biegeweich und/oder gelenkig ausgeführt sein.

Das tangentiale Abstützungselement kann am Innenbehälter und/oder am Außenbehälter auch unmittelbar befestigt sein, beispielsweise über Schweißbolzen.

Die Erstreckung des tangentialen Abstützungselements zwischen Innenbehälter und Außenbehälter weist vorzugsweise keine axiale Komponente in Richtung der Behälterachse auf - um besonders stark das rotatorische Eigenschwingungsverhalten zu verbessern - oder weist in einer anderen Ausführungsform eine axiale Komponente in Richtung der Behälterachse auf - so dass die Anforderungen an die polare Anbindung zwischen den Behältern geringer werden.

Das tangentiale Abstützungselement ist bevorzugt axial in einem nicht-zylindrischen Endbereich des Innenbehälters befestigt, also in einem Bodenbereich oder Endkappenbereich des Behälters, und bevorzugt in einem zylindrischen Bereich des Außenbehälters, also in dessen Mantel, oder ebenso in einem nicht-zylindrischen Endbereich des Außenbehälters, also einem Boden.

Das tangentiale Abstützungselement bildet bevorzugt im Wesentlichen eine tangentiale Verlängerung eines Umfangs des Innenbehälters, die sich zum Außenbehälter hin erstreckt. Dieser durch das tangentiale Abstützungselement verlängerte Umfang des Innenbehälters kann, im Boden- bzw. Endbereich, kleiner sein, als der Umfang des zylindrischen Mitten-Teils des Innenbehälters.

### Kurzbeschreibung der Zeichnungen

Die Erfindung wird im Folgenden beispielhaft unter Bezugnahme auf die Zeichnungen beschrieben.
- Fig. 1: ist eine dreidimensionale Explosionsdarstellung einer erfindungsgemäßen Kryotankvorrichtung an einem axialen Ende der Kryotankvorrichtung.
- Fig. 2: ist eine stirnseitige Ansicht des axialen Endes der Kryotankvorrichtung gemäß Fig. 1.
- Fig. 3: ist eine abschnittsweise Schnittansicht der erfindungsgemäßen Kryotankvorrichtung gemäß Schnitt B-B der Fig. 2.
- Fig. 4: ist eine Schnittansicht der erfindungsgemäßen Kryotankvorrichtung gemäß Schnitt C-C der Fig. 3.
- Fig. 5: ist eine dreidimensionale Detaildarstellung des Bereichs um ein Anbindungselement des tangentialen Abstützungselements am Innenbehälter.
- Fig. 6: ist eine dreidimensionale Detaildarstellung des Bereichs um ein Anbindungselement des tangentialen Abstützungselements am Außenbehälter.

### Detaillierte Beschreibung der Erfindung

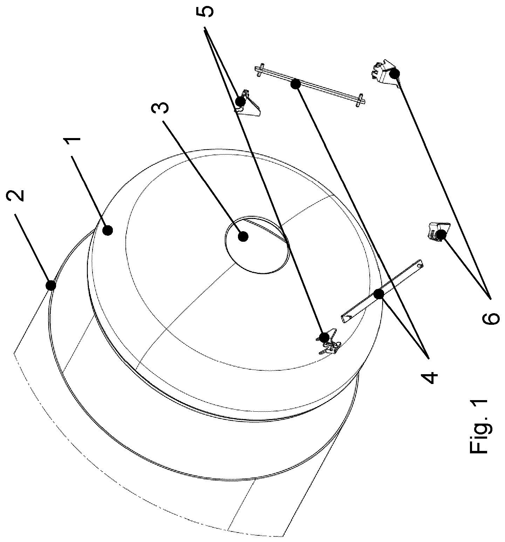

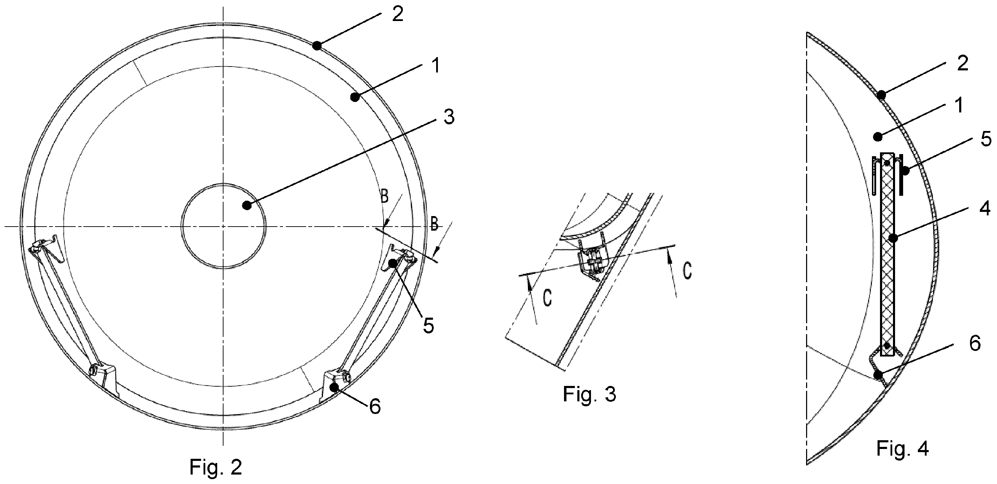

In den Fig. 1 und Fig. 2 ist der Bodenbereich einer erfindungsgemäßen Kryotankvorrichtung als Explosionsdarstellung (Fig. 1) bzw. von vorne (Fig. 2) dargestellt, wobei der Außenbehälter 2 nur abschnittsweise zu sehen ist. Fig. 3 und 4 stellen ausschnittsweise Schnittansichten des selben Kryotanks dar.

Die Kryotankvorrichtung umfasst einen zylindrischen Innenbehälter 1 zur Aufnahme von flüssigem Wasserstoff der im axialen Endbereich in einen Boden übergeht und einen Außenbehälter 2. Zwischen dem Innenbehälter 1 und dem Außenbehälter 2 ist ein Vakuumzwischenraum eingerichtet.

Zwischen dem Innenbehälter 1 und dem Außenbehälter 2, also bevorzugt im Vakuumzwischenraum, ist an jedem polaren also axialen Ende der Tanks jeweils eine polare Aufhängung 3 eingerichtet, von welcher eine mittig liegende Aufnahmeöffnung im Innenbehälter 1 dargestellt ist.

Die polare Aufhängung 3 wird durch ein Zentralrohr gebildet, das einseitig durch ein Festlager und auf der anderen Seite durch ein Loslager axial gleitend gelagert ist. Die polare Aufhängung 3 wird durch ein Verbundfaserrohr gebildet.

Mehrere stabförmige tangentiale Abstützungselemente 4, in der dargestellten Ausführungsform zwei tangentiale Abstützungselemente 4, sind zwischen dem Innenbehälter 1 und dem Außenbehälter 2, also im Vakuumzwischenraum, eingerichtet, so dass die tangentialen Abstützungselemente 4 im Wesentlichen in Umfangsrichtung ausgerichtet sind und im Wesentlichen jeweils tangentiale Verlängerungen eines Umfangs des Innenbehälters 1 bilden, die sich zum Außenbehälter 2 hin erstrecken.

Jedes tangentiale Abstützungselement 4 ist zumindest in einer Dimension normal auf dessen stabförmige Erstreckung beweglich ausgebildet, dadurch, dass jedes Abstützungselement 4 an einem Anbindungselement 5, 6 gelenkig gelagert ist.

Die tangentialen Abstützungselemente 4 sind einerseits am Innenbehälter 1, über Anbindungselemente 5 des jeweiligen tangentialen Abstützungselements 4 am Innenbehälter, und andererseits am Außenbehälter 2, über jeweilige Anbindungselemente 6 des tangentialen Abstützungselements 4 am Außenbehälter 6, befestigt.

Die Erstreckung der tangentialen Abstützungselemente 4 zwischen Innenbehälter 1 und Außenbehälter 2 weist keine axiale Komponente, in Richtung der Behälterachse, auf. Die tangentialen Abstützungselemente 4 liegen somit normal auf die Behältermittelachse. In einer anderen Ausführungsform können die tangentialen Abstützungselemente 4 auch eine axiale Komponente in Richtung der Behälterachse aufweisen, also auch nicht normal auf die Behältermittelachse liegen.

Die zwei tangentialen Abstützungselemente 4 sind spiegelsymmetrisch zueinander entlang des Umfangs des Innenbehälters 1 und des Außenbehälters 2 verteilt, befinden sich also an gleichen axialen Positionen.

Die tangentialen Abstützungselemente 4 sind axial in einem nicht-zylindrischen Endbereich des Innenbehälters 1 befestigt, also im Bereich eines konkav gewölbten Bodens bzw. einer Endkappe des Innenbehälters 1 und in einem Mantelbereich des Außenbehälters 2.

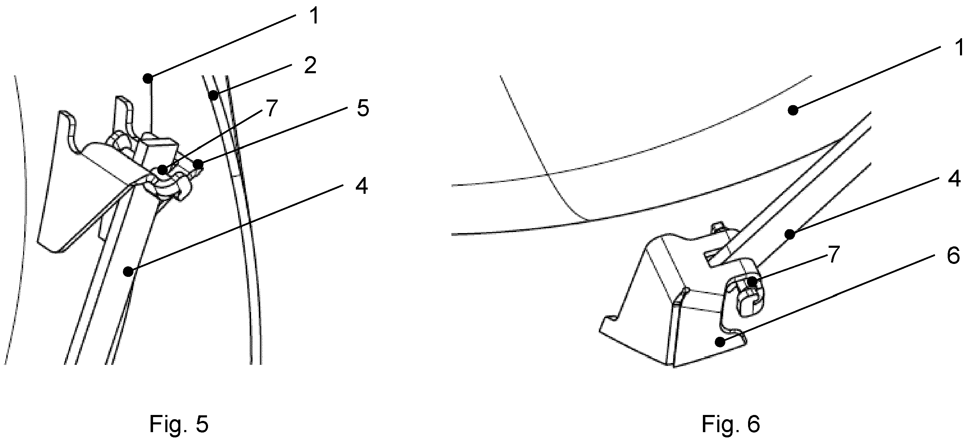

Ein Anbindungselement 5 am Innentank 1 und ein Anbindungselement 6 am Außenbehälter 2 ist in Fig. 5 bzw. Fig. 6 genauer dargestellt.

Jedes Anbindungselement 5, 6 weist einen Schwenkbolzen 7 auf, wobei das tangentiale Abstützungselement 4 am Schwenkbolzen 7 schwenkbar gelagert ist. Jedes Anbindungselement 5, 6 ist im Wesentlichen als dünnes Bauteil ausgebildet, dass sich von einem an der jeweiligen Behälterwand befestigten Fußteil bis zum Schwenkbolzen 7 erstreckt, so dass die Anbindungselemente 5, 6 eine geringe Wärmeleitfähigkeit aufweisen.

Dadurch ist das tangentiale Abstützungselement 4 am Innenbehälter 1 und/oder am Außenbehälter 2 mittelbar, jeweils über ein thermisch entkoppelndes Anbindungselement 5, 6 befestigt.

### Bezugszeichenliste

- 1: Innenbehälter
- 2: Außenbehälter
- 3: polare Aufhängung
- 4: tangentiales Abstützungselement
- 5: Anbindungselement am Innenbehälter
- 6: Anbindungselement am Außenbehälter
- 7: Schwenkbolzen

## Patentansprüche

1. Kyrotankvorrichtung umfassend einen Innenbehälter (1) zur Aufnahme eines Mediums, insbesondere von Wasserstoff, und einen Außenbehälter (2), wobei der Innenbehälter (1) und der Außenbehälter (2) im Wesentlichen zylindrische Form aufweisen, wobei zwischen dem Innenbehälter (1) und dem Außenbehälter (2) eine polare Aufhängung (3) eingerichtet ist, wobei die polare Aufhängung (3) ein Verbundfaserrohr als Zentralrohr umfasst,
**dadurch gekennzeichnet, dass** mindestens ein stabförmiges tangentiales Abstützungselement (4) zwischen dem Innenbehälter (1) und dem Außenbehälter (2) eingerichtet ist, so dass sich das tangentiale Abstützungselement (4) im Wesentlichen in Umfangsrichtung des Innen- und Außenbehälters (1, 2) von einer Anbindung am Innenbehälter (1) bis zu einer Anbindung am Außenbehälter (2) hin erstreckt, wobei das tangentiale Abstützungselement (4) zumindest in einer Dimension normal auf dessen stabförmige Erstreckung beweglich ausgebildet ist, wobei mehrere tangentiale Abstützungselemente (4) entlang des Umfangs des Innenbehälters (1) und des Außenbehälters (2) in regelmäßigen Abständen verteilt sind, wobei von mehreren tangentialen Abstützungselementen (4) jeweils zwei tangentiale Abstützungselemente (4) spiegelsymmetrisch angeordnet sind in Bezug auf eine jeweilige die Behälterachsen beinhaltende Ebene, wobei die Abstützungselemente (4) von biegeschlaffen Elementen gebildet werden, die nur Zugkräfte aufnehmen können.

2. Kyrotankvorrichtung nach Anspruch 1,
**dadurch gekennzeichnet , dass** das tangentiale Abstützungselement (4) am Innenbehälter (1) und/oder am Außenbehälter (2) mittelbar über ein thermisch entkoppelndes Anbindungselement (5, 6) befestigt ist.

3. Kyrotankvorrichtung nach zumindest einem der vorhergehenden Ansprüche,
**dadurch gekennzeichnet , dass** das tangentiale Abstützungselement (4) am Innenbehälter (1) und/oder am Außenbehälter (2) über ein Anbindungselement (5, 6) befestigt ist, wobei das Anbindungselement (5, 6) einen Schwenkbolzen (7) umfasst und wobei das tangentiale Abstützungselement (4) am Schwenkbolzen (7) schwenkbar gelagert ist.

4. Kyrotankvorrichtung nach zumindest einem der vorhergehenden Ansprüche,
**dadurch gekennzeichnet , dass** die Erstreckung des tangentialen Abstützungselements (4) zwischen Innenbehälter (1) und Außenbehälter (2) keine axiale Komponente in Richtung der Behälterachsen aufweist oder eine axiale Komponente in Richtung der Behälterachsen aufweist.

5. Kyrotankvorrichtung nach zumindest einem der vorhergehenden Ansprüche,
**dadurch gekennzeichnet , dass** das tangentiale Abstützungselement (4) axial in einem nicht-zylindrischen Endbereich des Innenbehälters (1) befestigt ist, also in einer Endkappe oder einem Boden des Innenbehälters (1), wobei bevorzugt das tangentiale Abstützungselement (4) axial in einem zylindrischen Bereich des Außenbehälters (2) befestigt ist, also in einem Mantel des Außenbehälters (2).

## Claims

1. Cryotanker comprising an inner container (1) for receiving a medium, in particular hydrogen, and an outer container (2), wherein the inner container (1) and the outer container (2) have a substantially cylindrical shape, wherein a polar suspension (3) is configured between the inner container (1) and the outer container (2), wherein the polar suspension (3) comprises a composite fibre tube as the central tube,
**characterized in that** at least one rod-shaped tangential support element (4) is configured between the inner container (1) and the outer container (2) in such a way that the tangential support element (4) substantially extends in the circumferential direction of the inner and outer container (1, 2), from an attachment to the inner container (1) to an attachment to the outer container (2), wherein the tangential support element (4) is designed in at least one dimension to be normally movably on its rod-shaped extent, wherein a plurality of tangential support elements (4) are distributed at regular spacings along the circumference of the inner container (1) and the outer container (2), wherein of a plurality of tangential support elements (4) two tangential support elements (4) are in each case disposed mirror symmetrically in relation to a respective plane containing the container axes, wherein the support elements (4) are formed by limp elements which can only absorb tensile forces.

2. Cryotanker according to Claim 1,
**characterized in that** the tangential support element (4) is fastened indirectly, by way of a thermally decoupling attachment element (5, 6), to the inner container (1) and/or to the outer container (2).

3. Cryotanker according to at least one of the preceding claims,
**characterized in that** the tangential support element (4) is fastened to the inner container (1) and/or to the outer container (2) by way of an attachment element (5, 6), wherein the attachment element (5, 6) comprises a swivel bolt (7) and wherein the tangential support element (4) is pivotally mounted on the swivel bolt (7).

4. Cryotanker according to at least one of the preceding claims,
**characterized in that** the extent of the tangential support element (4) between the inner container (1) and the outer container (2) has no axial component in the direction of the container axes, or has an axial component in the direction of the container axes.

5. Cryotanker according to at least one of the preceding claims,
**characterized in that** the tangential support element (4) is axially fastened in a non-cylindrical end region of the inner container (1), thus in an end cap or a base of the inner container (1), wherein preferably the tangential support element (4) is axially fastened in a cylindrical region of the outer container (2), thus in a jacket of the outer container (2).

## Revendications

1. Dispositif formant réservoir cryogénique comprenant un récipient intérieur (1) destiné à recevoir un milieu, notamment de l'hydrogène, et un récipient extérieur (2), le récipient intérieur (1) et le récipient extérieur (2) présentant une forme essentiellement cylindrique, une suspension polaire (3) étant établie entre le récipient intérieur (1) et le récipient extérieur (2), la suspension polaire (3) comprenant un tube en fibres composites en tant que tube central, **caractérisé en ce qu'**au moins un élément de support tangentiel en forme de tige (4) est établi entre le récipient intérieur (1) et le récipient extérieur (2), de telle sorte que l'élément de support tangentiel (4) s'étend essentiellement dans la direction circonférentielle des récipients intérieur et extérieur (1, 2) depuis une attache au récipient intérieur (1) jusqu'à une attache au récipient extérieur (2), l'élément de support tangentiel (4) étant réalisé sous forme mobile au moins dans une dimension normale à son extension en forme de tige, plusieurs éléments de support tangentiels (4) étant répartis à intervalles réguliers le long de la circonférence du récipient intérieur (1) et du récipient extérieur (2), deux éléments de support tangentiels (4) des plusieurs éléments de support tangentiels (4) étant agencés de manière symétrique par rapport à un plan respectif contenant les axes de récipient, les éléments de support (4) étant formés par des éléments souples en flexion qui ne peuvent absorber que des forces de traction.

2. Dispositif formant réservoir cryogénique selon la revendication 1,
**caractérisé en ce que** l'élément de support tangentiel (4) est fixé au récipient intérieur (1) et/ou au récipient extérieur (2) indirectement par l'intermédiaire d'un élément d'attache (5, 6) à découplage thermique.

3. Dispositif formant réservoir cryogénique selon au moins l'une quelconque des revendications précédentes,
**caractérisé en ce que** l'élément de support tangentiel (4) est fixé au récipient intérieur (1) et/ou au récipient extérieur (2) par l'intermédiaire d'un élément d'attache (5, 6), l'élément d'attache (5, 6) comprenant un boulon de pivotement (7) et l'élément de support tangentiel (4) étant monté pivotant sur le boulon de pivotement (7).

4. Dispositif formant réservoir cryogénique selon au moins l'une quelconque des revendications précédentes,
**caractérisé en ce que** l'extension de l'élément de support tangentiel (4) entre le récipient intérieur (1) et le récipient extérieur (2) ne présente pas de composante axiale dans la direction des axes de récipient ou présente une composante axiale dans la direction des axes de récipient.

5. Dispositif formant réservoir cryogénique selon au moins l'une quelconque des revendications précédentes,
**caractérisé en ce que** l'élément de support tangentiel (4) est fixé axialement dans une zone d'extrémité non cylindrique du récipient intérieur (1), c'est-à-dire dans un capuchon d'extrémité ou un fond du récipient intérieur (1), de préférence l'élément de support tangentiel (4) étant fixé axialement dans une zone cylindrique du récipient extérieur (2), c'est-à-dire dans une enveloppe du récipient extérieur (2).
